# EUROPÄISCHE PATENTSCHRIFT

(11) **EP 0 572 765 B1**
(45) Veröffentlichungstag und Bekanntmachung des Hinweises auf die Patenterteilung: **10.09.1997**
(21) Anmeldenummer: 93103330.2
(22) Anmeldetag: 02.03.1993
(51) Int. Cl.: C08L 23/14, C08L 23/08, B29C 41/08

(54) **Sinterfolie**
Sintered foil
Feuille frittée

(30) Priorität: 03.06.1992 DE 4218316
(43) Veröffentlichungstag der Anmeldung: 08.12.1993
(73) Patentinhaber: Benecke-Kaliko Aktiengesellschaft, D-30419 Hannover (DE)
(72) Erfinder: Wolff, Roland, Dr., W-3016 Seelze 8 (DE); Bruder, Axel, Dr.rer.nat, W-3006 Burgwedel 3 (DE)
(74) Vertreter: Hagemann, Heinrich, Dr.rer.nat., Dipl.-Chem.

(56) Entgegenhaltungen:
- EP-A- 0 243 206
- EP-A- 0 482 778

## Beschreibung

Die Erfindung betrifft eine Sinterfolie mit einem Gehalt an einem Copolymerisat und gegebenenfalls weiteren üblichen Zusatzstoffen.

Zur Herstellung von Kraftfahrzeuginnenauskleidungen, insbesondere zur Herstellung von Instrumententafeln, ist seit einiger Zeit die Anwendung sogenannter Powder-Slush-Moulding-Verfahren bekannt. So sind Sinterfolien bekannt, die nach diesem Verfahren unter Einsatz eines PVC-Pulvers hergestellt werden. Dabei wird das PVC-Pulver zusammengesintert und geliert. Bei diesem Prozeß wird weder zusätzlicher Druck noch zusätzliche Scherung angewandt. Bei dem Powder-Slush-Moulding-Verfahren, nachfolgend als "Slush"-Verfahren bezeichnet, werden folgende Verfahrensschritte der Reihe nach vollzogen: Aufheizen des Werkzeuges, Einfüllen des PVC-Pulvers und Rotation des Werkzeugs, Gelieren des PVC, Abkühlen und Entformen. Die nach dem Slush-Verfahren hergestellten Produkte haben gegenüber den tiefgezogenen Folien den Vorteil weitgehender Spannungsfreiheit und der weicheren Ausgestaltung. Darüber hinaus besteht beim Slush-Verfahren für den Designer eine größere Gestaltungsfreiheit. PVC-Materialien, wie auch die oben beschriebenen PVC-Sinterfolien werden im Hinblick auf den Umweltschutz mehr und mehr abgelehnt. Es wurden daher in der DE-OS 39 16 874 Sinterfolien auf der Basis von Polyurethan vorgeschlagen, die besonders zum Beschichten von Formteilen im Kraftfahrzeuginnenraum herangezogen werden. Werden nach diesem bekannten Vorschlag aromatische TPU herangezogen, dann stellen derartige Sinterfolien im Hinblick auf die Lichtechtheitsanforderung der Automobilindustrie nicht zufrieden. Aus der DE-OS 29 22 152 sind Sinterfolien aus insbesondere hochmolekularem Polyethylen bekannt. Diese erfüllten nicht stets die Anforderungen an beispielsweise Kraftfahrzeuginnenauskleidungen, insbesondere im Instrumententafelbereich. Als besondere Anforderungen können hier angegeben werden: Eine Härte Shore-A von etwa 70 bis 90, Fogging-Eigenschaften nach DIN 75 201/g von weniger als 1 mg und nach DIN 75 201/r von mehr als 85%, eine Lichtechtheit nach DIN 75 202 von mehr als LE 7. Diese Aufzählung ist nicht erschöpfend.

Die EP-A-0 482 778 offenbart ein Pulver eines thermoplastischen Elastomers für das Powder-Slush-Moulding-Verfahren. Die darin enthaltene Elastomermischung enthält einen Ethylen-alpha-Olefin-Copolymerkautschuk und ein Polyolefinharz und muß hinsichtlich ihrer komplexen dynamischen Viskosität und des Newtonschen Viskositätsindex bestimmte Bedingungen erfüllen.

Aus der EP-A-0 243 206 ist eine füllstoffhaltige Polypropylenharzmischung bekannt, die ein Polypropylenharz, ein modifiziertes Polypropylenharz, ein Ethylen-Alkyl(meth)acrylat-Dicarbonsäureanhydrid-Copolymer und einen Füllstoff enthält. Die Mischung soll geeignet zum Spritzguß, Strangpressen und Blasformen sein.

Der Erfindung lag die Aufgabe zugrunde, eine Sinterfolie auf der Basis eines thermoplastischen Polyolefins vorzuschlagen, die problemlos nach dem Slush-Verfahren hergestellt werden kann, die oben angesprochenen Anforderungen erfüllt und im Hinblick auf den Umweltschutz unbedenklich ist.

Erfindungsgemäß wird diese Aufgabe dadurch gelöst, daß die Sinterfolie ein Propylen-Copolymerisat mit einem Schmelzindex MFI 230/2,16 nach DIN 53 735 von mindestens 3g/10 min und ein Ethylen-Ethylacrylat-Copolymerisat mit einem Schmelzindex MFI 230/2,16 nach DIN 53 735 von mindestens 3g/10 min und einem Erweichungspunkt entsprechend der Vicat-Zahl nach JIS K6730 von mindestens 40 enthält, wobei das Ethylen-Ethylacrylat-Copolymerisat 7 bis 35 Gew.-% Ethylacrylat und auf 30 bis 70 Gew.-Teile Propylen-Copolymerisat 70 bis 30 Gew.-Teile Ethylen-Ethylacrylat-Copolymerisat entfallen.

Im Rahmen der Erfindung wird demzufolge als ein Hauptbestandteil der Sinterfolie ein Propylen-Copolymerisat mit einem Schmelzindex MFI 230/2,16 nach DIN 53 735 von mindestens 3 g/10 min, insbesondere mindestens 5g/10 min, vorzugsweise 10 g/10 min und besonders bevorzugt mindestens 12 g/10 min eingesetzt. Propylen-Homopolymerisate führen nicht zu den gewünschten Verfahrenserzeugnissen, da sie unerwünschte Harte und Sprödigkeit aufweisen. So sind beispielsweise Ethylen-Propylen-Copolymerisate besonders geeignet, was sowohl für Propylen-Blockcopolymerisate als auch für Random-Copolymerisate gilt. Die Random-Copolymerisate sind bevorzugt, da die damit hergestellten Sinterfolien geringeren Weißbruch zeigen. Der Ethylenanteil beträgt bei den Propylen-Block-Copolymerisaten vorzugsweise 5 bis 40%, insbesondere 7 bis 25%, und bei den Random-Copolymerisaten vorzugsweise 0,1 bis 7%, insbesondere 3 bis 5%. Das Ethylen-Propylen-Blockcopolymerisat zeigt eine wünschenswert hohe Schlagzähigkeit. Die Random-Copolymeriste des Propylens haben demgegenüber einen geringeren Kristallinitätsgrad. Damit verbunden sind bei den Fertigteilen höhere Zähigkeit, höhere Transparenz und ein breiterer Schmelztemperaturbereich.

Im Rahmen der Erfindung lassen sich als Propylen-Copolymerisate auch die verschiedensten Formen des EPDM einsetzen, d.h. in amorpher oder auch teilkristalliner Form. Hierbei handelt es sich um thermoelastische Materialien. Diese Materialien zeigen also auch elastische Eigenschaften, die in Einzelfällen von Vorteil sein können, insbesondere wenn eine ausgeprägte Weichheit der erfindungsgemäßen Sinterfolie verlangt wird. Einsetzbar sind auch teilvernetzte Ethylen-Propylen-Kautschuke. Das Ethylen-Ethylacrylat-Copolymerisat, das im Rahmen der Erfindung eingesetzt wird, ist im angesprochenen Gemisch die "weiche" Komponente.

Das Ethylen-Ethylacrylat-Copolymerisat hat einen Schmelindex von mindestens 3 g/10 min und vorzugsweise mindestens 10 g/10 min.

Durch das Einführen der Ethylacrylat-Gruppe in die PE-Kette wird der Kristallinitätsgrad verringert, was zu einer größeren Flexibilität und niedrigeren Schmelztemperatur führt. Mit dem Acrylatgehalt nimmt auch die Polarität des Polymeren zu, die größere intermolekulare Kräfte bewirkt. Durch Erhöhen der Molmasse können auch einige physikalische Eigenschaften verbessert werden.

Die oben angesprochenen Komponenten in Form des Propylen-Copolymerisats und des Ethylen-Ethylacrylat-Copolymerisats verbindet beide die Forderung, daß sie allein unter den jeweils gewählten Sinterbedingungen guten Verlauf zeigen sollten. Sie haben darüber hinaus die gleiche Mindestanforderung an den oben bezeichneten Schmelzindex. Bei Einhaltung der erfindungsgemäßen Rahmenbedingungen führen sie im funktionellen Zusammenwirken zu dem gewünschten Produkt mit den zu fordernden Eigenschaften. Zweckmäßigerweise wird dabei die Erfindung in einer Weise verwirklicht, daß zusätzlich noch folgende mechanische Eigenschaften bedacht werden:
a) Reißdehnung nach DIN 53 455 von mehr als 200%,
b) Zugfestigkeit nach DIN 53 455 von mehr als 12 N/mm²,
c) Änderung der Reißdehnung auf mindestens 66% und der Zugfestigkeit auf maximal 110% des Ausgangswertes nach einer Wärmelagerung von 500 h bei 120°C.

Es hat sich bei der Herstellung der erfindungsgemäßen Sinterfolie gezeigt, daß die Temperaturen bei der Verarbeitung von PVC auch hier geeignet sind. Das bedeutet, daß man mit gängigen Systemen arbeiten kann. So liegt derzeit der Temperaturbereich zwischen 210 und 230°C. Es läßt sich somit feststellen, daß die den erörterten Ausgangsmaterialien in Form des Propylen-Copolymerisats und des Ethylen-Ethylacrylat-Copolymerisats inhärenten Eigenschaften sich in Abhängigkeit von der Art des Ausgangsmaterials sowie deren Mischungsverhältnis auf die Eigenschaften der fertigen erfindungsgemäßen Sinterfolie auswirken.

In der erfindungsgemäßen Folie können auch übliche Zusatzstoffe enthalten sein. Dabei sind insbesondere Enfformungshilfsmittel von Bedeutung, wie Polyethylen- oder Polypropylen-Wachse. Vorzugsweise ist das Entformungshilfsmittel in einer Menge von 0,3 bis 1,5 Gew.-% in der Folie enthalten. Als weitere geeignete Zusatzstoffe kommen in Frage UV-Stabilisatoren, wie verschiedene niedermolekulare und auch hochmolekulare substituierte Resorcine, Salicylate, Benzotriazole und Benzophenone und/oder Mischungen derselben und dergleichen, und Antioxidantien, wie insbesondere die handelsübliche komplizierte Verbindung Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]] (als Lichtstabilisator), Bis-2,2,6,6-tetramethyl-4-piperidylsebacat (als Lichtstabilisator) sowie das Phenol,-2,4-bis(1,1-dimethylethyl)-,phosphit (3:1), und Füllstoffe, insbesondere in Form von Kaliumaluminiumsilicat, Talkum, Kreide, Kaolin, Metalloxiden, insbesondere Titandioxid, und/oder Ruß.

Nachfolgend soll die Erfindung anhand von Beispielen noch näher erläutert werden:

### Beispiel 1

### Rezeptur: (eingesetztes Material: 500 g)

70 Gew.-Teile Propylen-Copolymerisat (Schmelzindex 17 g/10 min) mit einem Ethylen-Gehalt von 4%

30 Gew.-Teile Ethylen-Ethylacrylat-Copolymerisat (EEA) (Schmelzindex 69 g/10 min) mit einem EA-Gehalt von 17%.

Eine Mischung nach obiger Rezeptur wird auf einem Laborkneter in üblicher Weise compoundiert. Diese compoundierte Mischung wird auf einem Collin-Walzwerk zu einer Folienstärke von 1 mm ausgewalzt. Diese Folie wurde auf einem Häcksler zu Teilchen einer Länge von 5 mm gehäckselt. Es schließt sich ein Kaltmahlen in einer Laborturbomühle an. Die durchschnittliche Teilchengröße des erhaltenen Pulvers liegt unter 500 µm. Dieses Pulver wird in einer Labor-Slush-Anlage bei einer Temperatur von 220°C zu einer Folie mit einer Stärke von 1 mm während einer Zeitdauer von 2 1/2 Minuten verarbeitet. Die erhaltene Folie zeigt folgende Eigenschaften: Harte nach DIN 53 505 Shore-A 86.

### Beispiel 2

Das Beispiel 1 wurde wiederholt, wobei das Ausgangsmaterial jedoch folgender Rezeptur entsprach: 30 Gew.-Teile Propylen-Copolymerisat (Schmelzindex 17g/10min) mit einem Ethylen-Gehalt von 4% und 70 Gew.-Teile Ethylen-Ethylacrylat-Copolymerisat (EEA) (Schmelzindex 69g/10min) mit einem EA-Gehalt von 17%.

Die Eigenschaften der erhaltenen Sinterfolie waren wie folgt: Harte nach DIN 53 505 Shore-A 74.

## Patentansprüche

1. Sinterfolie mit einem Gehalt an einem Copolymerisat und gegebenenfalls weiteren üblichen Zusatzstoffen, dadurch gekennzeichnet, daß sie ein Propylen-Copolymerisat mit einem Schmelzindex MFI 230/2,16 nach DIN 53 735 von mindestens 3g/10 min und ein Ethylen-Ethylacrylat-Copolymerisat mit einem Schmelzindex MFI 230/2,16 nach DIN 53 735 von mindestens 3g/10 min und einem Erweichungspunkt entsprechend der Vicat-Zahl nach JIS K6730 von mindestens 40 enthält, wobei das Ethylen-Ethylacrylat-Copolymerisat 7 bis 35 Gew.-% Ethylacrylat enthält und auf 30 bis 70 Gew.-Teile Propylen-Copolymerisat 70 bis 30 Gew.-Teile Ethylen-Ethylacrylat-Copolymerisat entfallen.

2. Sinterfolie nach Anspruch 1, dadurch gekennzeichnet, daß das Propylen-Copolymerisat ein Random-Copolymerisat ist.

3. Sinterfolie nach Anspruch 2, dadurch gekennzeichnet, daß das Random-Copolymerisat aus Ethylen und Propylen besteht.

4. Sinterfolie nach Anspruch 3, dadurch gekennzeichnet, daß der Ethylenanteil in dem Random-Copolymerisat 3 bis 5% beträgt.

5. Sinterfolie nach mindenstens einem der vorhergehenden Ansprüche, dadurch gekennzeichnet, daß der Schmelzindex des Propylen-Copolymerisats mindestens 5g/10 min beträgt.

6. Sinterfolie nach Anspruch 5, dadurch gekennzeichnet, daß der Schmelzindex des Propylen-Copolymerisats mindestens 12g/10 min beträgt.

7. Sinterfolie nach mindestens einem der vorhergehenden Ansprüche, dadurch gekennzeichnet, daß der Schmelzindex des Ethylen-Ethylacrylat-Copolymerisats mindestens 10g/10 min beträgt.

8. Sinterfolie nach mindestens einem der vorhergehenden Ansprüche, dadurch gekennzeichnet, daß sie ein Entformungshilfsmittel enthält.

9. Sinterfolie nach Anspruch 8, dadurch gekennzeichnet, daß das Entformungshilfsmittel ein Polyethylen- oder Polypropylen-Wachs ist.

10. Sinterfolie nach Anspruch 8 oder 9, dadurch gekennzeichnet, daß das Entformungshilfsmittel in der Folie in einer Menge von 0,3 bis 1,5 Gew.-% vorliegt.

## Claims

1. Sintered sheet having a content of a copolymer and, if desired, further customary additives, characterized in that it comprises a propylene copolymer having a melt flow index MFI 230/2.16 in accordance with DIN 53 735 of at least 3 g/10 min and an ethylene-ethyl acrylate copolymer having a melt flow index MFI 230/2.16 in accordance with DIN 53 735 of at least 3 g/10 min and a softening point corresponding to the Vicat number in accordance with JIS K6730 of at least 40, with the ethylene-ethyl acrylate copolymer containing from 7 to 35% by weight of ethyl acrylate and from 70 to 30 parts by weight of ethylene-ethyl acrylate copolymer being present per 30 to 70 parts by weight of propylene copolymer.

2. Sintered sheet according to Claim 1, characterized in that the propylene copolymer is a random copolymer.

3. Sintered sheet according to Claim 2, characterized in that the random copolymer comprises ethylene and propylene.

4. Sintered sheet according to Claim 3, characterized in that the proportion of ethylene in the random copolymer is from 3 to 5%.

5. Sintered sheet according to at least one of the preceding claims, characterized in that the melt flow index of the propylene copolymer is at least 5 g/10 min.

6. Sintered sheet according to Claim 5, characterized in that the melt flow index of the propylene copolymer is at least 12 g/10 min.

7. Sintered sheet according to at least one of the preceding claims, characterized in that the melt flow index of the ethylene-ethyl acrylate copolymer is at least 10 g/10 min.

8. Sintered sheet according to at least one of the preceding claims, characterized in that it contains a mould release agent.

9. Sintered sheet according to Claim 8, characterized in that the mould release agent is a polyethylene wax or propylene wax.

10. Sintered sheet according to Claim 8 or 9, characterized in that the mould release agent is present in the sheet in an amount of from 0.3 to 1.5% by weight.

## Revendications

1. Feuille frittée ayant une teneur en un copolymérisat et, le cas échéant, en d'autres additifs classiques, caractérisée en ce qu'elle contient un copolymérisat de propylène ayant un indice de fluidité MFI 230/2,16 selon la norme DIN 53 735 d'au moins 3 g/10 min et un copolymérisat éthylène-acrylate d'éthyle ayant un indice de fluidité MFI 230/2,16 selon la norme DIN 53 735 d'au moins 3 g/10 min et un point de ramollissement correspondant au point Vicat selon la norme JIS K6730 d'au moins 40, le copolymérisat éthylène-acrylate d'éthyle contenant 7 à 35 % en poids d'acrylate d'éthyle et la feuille contenant 70 à 30 parties en poids de copolymérisat éthylène-acrylate d'éthyle pour 30 à 70 parties en poids de copolymérisat de propylène.

2. Feuille frittée suivant la revendication 1, caractérisée en ce que le copolymérisat de propylène est un copolymérisat statistique.

3. Feuille frittée suivant la revendication 2, caractérisée en ce que le copolymérisat statistique est constitué d'éthylène et de propylène.

4. Feuille frittée suivant la revendication 3, caractérisée en ce que la proportion d'éthylène dans le copolymérisat statistique s'élève à 3-5 %.

5. Feuille frittée suivant au moins l'une des revendications précédentes, caractérisée en ce que l'indice de fluidité du copolymérisat de propylène s'élève au moins à 5 g/10 min.

6. Feuille frittée suivant la revendication 5, caractérisée en ce que l'indice de fluidité du copolymérisat de propylène s'élève au moins à 12 g/10 min.

7. Feuille frittée suivant au moins l'une des revendications précédentes, caractérisée en ce que l'indice de fluidité du copolymérisat éthylène-acrylate d'éthyle s'élève au moins à 10 g/10 min.

8. Feuille frittée suivant au moins l'une des revendications précédentes, caractérisée en ce qu'elle contient un agent auxiliaire de démoulage.

9. Feuille frittée suivant la revendication 8, caractérisée en ce que l'agent auxiliaire de démoulage est une cire polyéthylénique ou polypropylénique.

10. Feuille frittée suivant la revendication 8 ou 9, caractérisée en ce que l'agent auxiliaire de démoulage est présent dans la feuille en une proportion de 0,3 à 1,5 % en poids.
